# EUROPEAN PATENT SPECIFICATION

(11) **EP 0 690 075 B1**
(45) Date of publication and mention of the grant of the patent: **06.05.1999**
(21) Application number: 95201735.8
(22) Date of filing: 26.06.1995
(51) Int. Cl.: C08F 4/48, C08F 36/04, C08F 279/02

(54) **PROCESS FOR THE PREPARATION OF BLOCK COPOLYMERS USING DIFUNCTIONAL ANIONIC POLYMERISATION INITIATORS**
Verfahren zur Herstellung von Blockcopolymeren unter Verwendung von difunktionellen anionischen Polymerisationsinitiatoren
Procédé de préparation de polymères séquencés en utilisant des initiateurs de polymérisation anionique difonctionnels

(30) Priority: 27.06.1994 EP 94201847
(43) Date of publication of application: 03.01.1996
(73) Proprietor: SHELL INTERNATIONALE RESEARCH MAATSCHAPPIJ B.V., 2596 HR Den Haag (NL)
(72) Inventor: van der Steen, Frederik Hendrik, NL-1031 CM Amsterdam (NL); Walhof, Judith Johanna Berendina, NL-1031 CM Amsterdam (NL)

(56) References cited:
- EP-A- 0 682 041
- FR-A- 2 313 389
- US-A- 3 903 168

## Description

The present invention relates to a process for the manufacture of substantially symmetrical block copolymers derived from a conjugated diene and a monovinylaromatic monomer using difunctional anionic polymerization initiators.

The preparation of dilithium organo compounds for the anionic polymerization of monovinylaromatic and/or conjugated diene monomers into block copolymers was known in principle from e.g. US patents Nos. 3,652,516; 3,734,973; 3,663,634; 3,694,516; 3,668,263; 3,903,168; 3,954,894; 4,039,593; 4,172,100; 4,182,818; 4,960,842; European patent applications Nos. 0316857 and 4132294 and from Macromolecules 5, 453-8 (1969); R.P. Foss et al, Macromolecules 12, 344-6 (1979); C.W. Kamienski et al, Curr. Appl. Sci. Med. Technol. 315-25 (1985); R.P. Foss et al, Macromolecules 10, 287-291 (1977); R.P. Foss et al, Macromolecules 12, 1210-1216 (1979); Polymer 23, 1953-9 (1982); T.E. Long et al, J. Polym. Sci. Part A, Polym. Chem. vol. 27, 4001-4012 (1989).

In particular from the US patent No. 3,663,634 the preparation of hydrocarbon soluble organodilithium polymerization initiators was known. Said preparation comprised intimately contacting lithium metal with at least one compound selected from the group consisting of polyaryl substituted ethylenes, hydrocarbon substituted and unsubstituted conjugated diolefins and vinyl substituted aromatic compounds containing only carbon and hydrogen atoms, in a solvent mixture comprising
(A) at least one solvent member selected from the group consisting of aliphatic, cycloaliphatic and aromatic hydrocarbons, and
(B) at least one solvent member selected from a group of aromatic ethers, aromatic thioethers and tertiary amines, and wherein the volume fraction of solvent component (A) in the mixture can range from 57.0 vol% to 92.0 vol% and wherein the volume fraction of solvent component (B) in the solvent mixture can range from 8.0 to 43.0 vol%.

As component (B) preferably anisole was proposed and as the polyaryl-substituted ethylene 1,1-diphenylethylene was proposed.

The preferred amount of anisole in the solvent mixture was indicated to be 15 vol% in combination with 85 vol% benzene.

From US patent 3,694,516 was known a method for the preparation of a solvated lithium metal adduct of at least one member selected from the group consisting of (a) conjugated polyene hydrocarbon monomers and in particular 1,3-butadiene or isoprene, (b) vinyl substituted aromatic hydrocarbon monomers and in particular styrene, (c) mixtures of (a) and (b), and (d) their slightly chain-extended oligomers, which comprised providing a solution, in an organic solvent which includes at least one member selected from volatile liquid inert strongly solvating dialkyl ethers, cyclic ethers and tertiary amines, of at least one di- or polylithio adduct selected from the aforesaid (a), (b), (c) and (d) groups, admixing said solution with at least one member selected from the group consisting of weakly solvating liquid ethers (e.g. anisole) and weakly solvating liquid tertiary amines, said weakly solvating compounds having a boiling point substantially higher than the boiling point of said strongly solvating compound, and evaporating from said mixture substantially all of said strongly solvating compound without substantial evaporation of said weakly solvating compound.

The preferred liquid hydrocarbon solvent was benzene.

In US patent No. 4,196,154 multifunctional lithium containing initiators were later on disclosed, which were soluble in hydrocarbon solvents and thus highly useful in the preparation of block copolymers aimed at.

Additional teachings regarding the use of multifunctional lithium based initiators could be found in e.g. US patents Nos. 4,201,729; 4,200,718; 4,205,016; 4,172,190 and 4,196,153. However, the disadvantage connected with the use of multifunctional lithium containing initiators, providing polymers having rather wide molecular weight distributions (1.1 or greater), still remained.

Additional techniques were proposed, such as the use of coinitiators such as lithium alkoxides or specific triamines such as pentamethyldiethylene triamine or combinations thereof to obtain butadiene containing block copolymers having molecular weight distributions down to 1.06. Similar polymers containing primarily isoprene did not become available at all, because isoprene appeared to be less easily polymerizable by anionic techniques compared to butadiene and even rapid polymer addition did not occur.

It has been generally appreciated by persons skilled in the art, that block copolymers of improved tensile strength are obtained if the block copolymer has a reduced molecular weight distribution. In particular, a triblock polymer of the formula styrene/isoprene/ styrene prepared by conventional coupling of monofunctional lithium initiated diblock copolymers was found to demonstrate significantly improved tensile strength for equivalent number average molecular weight polymers, if the molecular weight distribution (Mw/Mn) is 1.03 instead of 1.20, L.C. Case, Makromol. Chem. V. 37, p 243 (1960).

Therefore there is still a need for block copolymers of monovinylaromatic monomer and conjugated diene, having the presently required physical properties and hence a related appropriate molecular weight distribution.

According to the disclosure of the European patent application No. 0316.857 it was tried to produce the block copolymers aimed at by means of a process, using a specific diinitiator organo-lithium compound and a specific organic diamine or triamine, optionally combined with a metal alkoxide having from 2 to 16 carbon atoms.

From the European patent application No. 0413.294 it was known to produce narrow molecular weight distribution block copolymers (Mw/Mn in the range from 1.027 to 1.058) of the formula B-B'-X-(B'-B) or A-B-B'-X-(-B'BA) wherein A was a block of a non elastomeric monomer, B is a block of isoprene, B' is a block of butadiene and X is the remnant of a hydrocarbon soluble difunctional lithium initiator, said block copolymer having a molecular weight distribution (Mw/Mn) of less than 1.06.

As specific difunctional lithium based initiator were mentioned 1,3- or 1,4-phenylene bis(3-methyl-1-phenylpentylidene) bislithium or 1,3- or 1,4-phenylene bis(3-methyl-1-(4-methyl)phenyl-pentyliydene) bislithium.

Moreover the polymerization was conducted in the presence of an aliphatic triamine and in particular N,N,N',N'',N''-pentamethyl diethylene triamine.

It will be appreciated that especially from both before mentioned European patent publications there was a teaching to a person skilled in the art to use multifuntional amines during the polymerization of the block copolymers aimed at.

Although the use of dilithio initiators for the preparation of symmetrical block copolymers having an appropriate narrow molecular weight distribution had been disclosed in principle for a long time, up to now no actual commercial polymerization process has been carried out with the use of said initiators, due to an inevitably occurring too high vinyl content in the poly(conjugated diene) blocks caused by the copresence of a polar compound such as amines or ethers.

It will be appreciated that symmetrical block copolymers aimed at, can in principle be manufactured by coupling of living initially prepared intermediate block copolymers with a multifunctional and in particular difunctional coupling agent.

However a practical disadvantage of such coupling process was formed by the presence in the final block copolymer of a usually difficultly controllable amount of non coupled terminated initially prepared block copolymer.

Moreover living block copolymers containing poly (polar vinyl monomer) blocks such as poly (acrylate) must contain such blocks always at the living end of the polymer, as for practical reasons the polar vinyl monomer always must be polymerised after the monovinyl aromatic and/or conjugated diene monomer in order to enable adaptation of nucleophilic properties, and therefore radial or linear coupled block copolymers containing terminal poly (polar vinyl monomer) blocks could not be obtained.

Another alternative preparation route of such symmetrical block copolymers comprises the fully sequential polymerization by using a monofunctional organolithium initiator optionally in combination with a second initiation to provide a predetermined controlled amount of diblock copolymer.

However, a problem of said full sequential polymerization process is caused by a relatively broad molecular weight distribution of the block segment, due to a relatively difficult initiation of the last monomer charge and a difficult control of the molecular weight of the last block.

It will be appreciated that an industrial process for the preparation of symmetrical block copolymers, and in particular symmetrical triblock copolymers, which show an acceptable molecular weight distribution in combination with a relatively low vinyl content in the poly(conjugated diene) blocks due to 1,2 or 3,4 polymerization, which could meet the requirements of modern end uses of said block copolymers, by the use of a difunctional organolithium initiator, may provide significant advantages such as shorter polymerization times.

An object of the present invention was therefore to provide a suitable difunctional organolithium initiator. Additional objects of the present invention was to provide an attractive industrial process for the preparation of symmetrical block copolymers as specified hereinbefore and to provide a process for the preparation of such initiators.

As a result of extensive research and experimentation such a difunctional organolithium initiator aimed at was surprisingly found.

Accordingly the present invention relates to a process for the anionic polymerisation of monovinylaromatic monomers and conjugated dienes to form symmetrical triblock copolymers having the combination of narrow molecular weight distribution (Mw/Mn ≤ 1.20) and relatively low vinyl content (≤ 10%) of the predominantly poly(conjugated diene) blocks, which comprises:- charging a predominantly conjugated diene monomer to an α,ω-dilithio initiator in an apolar solvent and, after polymerization is essentially complete, charging a predominantly monovinylaromatic monomer, optionally after adding an ether to promote the cross-over, and continuing polymerisation until it is again essentially complete; the said α,ω-dilithio initiator being obtainable by reacting two equivalents mono-organolithium initiator with one equivalent 1,3-diisopropenylbenzene at a temperature in the range of from -20 to 60 °C in an apolar hydrocarbon solvent, and in the presence of a monofunctional tertiary amine in a molar ratio relative to mono-organolithium initiator of from 0.5 to 2, preferably from 1.0 to 1.5, followed by addition to the reaction mixture of a small amount of conjugated diene monomer and, if any, less than 15 vol% of an aromatic ether activator relative to the total solvent volume, at a temperature in the range of from 0 to 30 °C, to form a solution of an α,ω-dilithio poly(conjugated diene), having an apparent molecular weight in the range of from 1000 to 3000.

It should be noted that in copending EP-0682041 A a process is described which differs from the present process in that at least 15% wt of an aromatic ether activator is used.

As mono-organolithium initiator is preferably used sec.butyllithium or tert.butyllithium, the former of which is most preferred.

The reaction temperature during the reaction of 1,3-diisopropenylbenzene with the monoorganolithium initiator is preferably in the range of from -10 to 50 °C and more preferably in the range of from 0 to 30 °C.

The apolar hydrocarbon solvent was found to be preferably selected from cycloalkanes, having from 5 to 8 carbon atoms and more preferably having 5 or 6 carbon atoms.

Also mixtures of such cycloalkanes or mixtures of predominant amounts of such cycloalkanes and minor amounts of aliphatic hydrocarbons having from 5 to 8 carbon atoms can be used, but the use of substantially pure cyclohexane or substantially pure cyclopentane was found to be most preferred.

The conjugated diene monomer to be added in small amounts to the reaction medium can be selected from butadiene, isoprene, 2-ethyl-1,3-butadiene, 2,3-dimethyl-1,3-butadiene and 1,3-pentadiene or mixtures thereof.

As conjugated diene is preferably used the same conjugated diene as those which constitute later on the poly(conjugated diene) block(s) in the final block copolymer.

The apparent molecular weight of the prepared α,ω-dilithio initiator is preferably in the range of from 1000 to 2800 and more preferably from 1200 to 2300.

Said apparent molecular weight is determined by gel permeation chromatography using polystyrene standard calibration polymers.

It was surprisingly found that stable, hydrocarbon solvent soluble α,ω-dilithio initiators could be obtained by addition of a small amount of a conjugated diene monomer and a specific amount of monofunctional tertiary amine relative to the amount of monolithium compound which appear to influence the stereochemistry of the diene polymerization in an acceptable minimal degree during the subsequent use of the initiator for the preparation of the final block copolymer (vinyl content was found to be at most 10%).

Suitable examples of monofunctional amines to be used for the preparation of the diinitiator of present invention are trialkylamines, the alkyl groups in which containing from 1 to 5 carbon atoms and more preferably from 2 to 4 carbon atoms, triarylamines or tri(aralkyl)amines. Most preferably triethylamine is used.

With the term "predominantly conjugated diene", as used throughout this specification, is meant that the indicated monomer may be substantially pure or mixed in a minor degree with a structurally related monomer or with a structurally different monomer and preferably the same comonomer, which occurs in other block segments, i.e. in amounts of less than 15 mol% of the total monomers of said blocks and preferably less than 5 mol%.

Suitable examples of monomer mixtures constituting the blocks A are mixtures of styrene and minor amounts of monomers selected from the group consisting of alpha-methylstyrene, p-vinyltoluene, m-vinyl toluene, o-vinyltoluene, 4-ethylstyrene, 3-ethylstyrene, 2-ethylstyrene, 4-tert.butylstyrene, 2,4-dimethylstyrene, 2 or 4-vinylpyridine butadiene, isoprene, 2-ethyl-1,3-butadiene, 2,3-dimethyl-1,3-butadiene and 1,3-pentadiene or mixtures thereof.

Suitable examples of monomer mixtures constituting block B are mixtures of isoprene or butadiene and minor amounts of monomers selected from styrene, alpha-methylstyrene, p-vinyltoluene, m-vinyltoluene, o-vinyltoluene, 4-ethylstyrene, 3-ethylstyrene, 2-ethylstyrene, 4-tert.butylstyrene, 2,4-dimethylstyrene, butadiene or isoprene, 2-ethyl-1,3-butadiene, 2,3-dimethyl-1,3-butadiene and 1,3-pentadiene or mixtures thereof.

Preferably the constituting monomers of blocks A are mixtures of styrene in a major amount and structurally related monomers as specified hereinbefore in a minor amount and preferably alpha-methylstyrene, while the constituting monomers of block B are selected from butadiene, isoprene and mixtures thereof.

Most preferably the blocks A and B are constituted by one substantially pure monomer.

Suitable examples of cross-over ethers are THF, dioxo, diethoxypropane, glyme, and diglyme. Diethoxypropane is the most preferred.

It will be appreciated that according to a preferred process embodiment, the main solvent used for initial preparation of α,ω-dilithio initiator and the main solvent used during the actual block copolymer polymerization is the same, although it is not strictly necessary.

Suitable examples of ethers to be used as cosolvent for the polymerization of the polar vinyl monomers are diethylether, THF, tert-butylmethylether, and diisopropylether.

A further aspect of the present invention is formed by the block copolymers, obtained by the hereinbefore specified process and characterised by the combination of a narrow molecular weight distribution (Mw/Mn ≤ 1.20) and preferably ≤ 1.10) and a relatively low vinyl content of the predominantly poly(conjugated diene)blocks (≤10%).

Preferred block copolymers according to the present invention are linear triblock copolymers derived from styrene, butadiene or isoprene, and 2- or 4-vinylpyridine respectively as pure block constituents.

The invention is illustrated by the following examples.

### EXAMPLE 1

### Reaction of BuLi with 1,3-diisopropenyl benzene Procedure A

To a stirred vessel, containing 80 ml of dry cyclohexane 0.65 g (6.4 mmoles) of triethylamine were added. Subsequently, 6.3 mmoles of s-BuLi (3.6 g of a 12 wt% solution in hexanes) and 0.48 g (3 mmoles) of 1,3-diisopropenylbenzene were added at room temperature. The reaction was continued for 35 minutes at room temperature, leading to a dark red solution.

### Procedure B

To a stirred vessel, containing 200 ml of dry cyclohexane, 0.61 g (6 mmoles) of triethylamine were added. Subsequently, 6 mmoles of t-BuLi (5 ml of a 1.2 Molar solution in hexanes) and 0.48 g (3 mmoles) of 1,3-diisopropenylbenzene were added at 0 °C. The reaction was continued for 1 hour.

### EXAMPLE 2

### Preparation of α,ω-dilithiopolybutadiene Procedure A

To the solution obtained by procedure A of Example 1 4.6 g of butadiene were added at 0 °C. The dark red colour rapidly changes to a light orange and becomes pale yellow after stirring overnight at room temperature. This solution was used as stock for polymerization experiments with a concentration of α,ω-dilithiopolybutadiene (MW = 1350) of 0.025 Molar.

### Procedure B

To the solution obtained by procedure B of Example 1 5.8 g of butadiene were added at 0 °C The dark red colour rapidly changes to a light orange and becomes pale yellow after stirring overnight. This solution was used as stock for polymerization experiments with a concentration of α,ω-dilithiopolybutadiene (MW = 2100) of 0.015 Molar.

### Example 3

### Synthesis of SBS block copolymers with α,ω-dilithiopolybutadiene A using diethoxypropane as promotor for the cross-over to styrene polymerization

To a polymerization bottle, charged with 250 ml of dry cyclohexane, a few drops of α,ω-dilithiopolybutadiene A were added to titrate the solution. Thereafter the reactor was charged with 11.2 g of butadiene and 6 ml of solution A (containing 0.15 mmol diinitiator) at room temperature. Polymerization was carried out for 2 hours at 60 °C. A sample was withdrawn for analysis. The polybutadiene has the following characteristics: peak MW 78000 g/mol, Mw/Mn = 1.18 and a vinyl content of 9.2%. To the bottle reactor were then added 25 µL (100 ppm) of diethoxypropane and 5.4 g of styrene and polymerization was continued for 30 minutes at 60 °C. To the solution 1 ml of ethanol was added to terminate the polymerization. The recovered triblock copolymer was stabilized with antioxidant and had the following characteristics: peak MW 97000 g/mol, Mw/Mn = 1.19. A sample was subjected to ozonolysis to leave PS with peak MW 20000 g/mol.

### Examples 4-5

Following the procedure of Example 3, two other SBS triblock copolymers were prepared with the characteristics as shown in Table I.

| Sample | MW PB | MW PS^{a} | M_{w}/Mₙ | vinyl % | PS (ozone) |
|---|---|---|---|---|---|
| 4 | 84000 | 15000 | 1.19 | 9.2 | 16000 |
| 5 | 81000 | 21000 | 1.21 | 9.2 | 21500 |

| | | | | | |
|---|---|---|---|---|---|
| ^{a}Calculated from GPC and ¹H NMR, assuming a triblock structure. | | | | | |

### Example 6

### Synthesis of SIS block copolymers with α,ω-dilithiopolybutadiene A using diethoxypropane as promotor for the cross-over to styrene polymerization

To a polymerization bottle, charged with 250 ml of dry cyclohexane a few drops of α,ω-dilithiopolybutadiene A were added to titrate the solution. Thereafter the reactor was charged with 14.7 g of polyisoprene and 6 ml of solution A (containing 0.15 mmol diinitiator) at room temperature. Polymerization was carried out for 90 minutes at 60 °C. A sample was withdrawn for analysis. The polyisoprene has the following characteristics: peak MW 114000 g/mol, Mw/Mn = 1.17 with a 3,4 content of 4.6%. To the bottle were then added 25 µL (100 ppm) of diethoxypropane and 3.4 g of styrene and polymerization was continued for 30 minutes at 60 °C. To the solution was added 1 ml of ethanol to terminate the polymerization. The recovered triblock copolymer was stabilized with antioxidant and had the following characteristics: peak MW 133000 g/mol, Mw/Mn = 1.25. A sample was subjected to ozonolysis to leave PS with peak MW 12000 g/mol.

### Example 7

### Synthesis of SBS block copolymer with α,ω-dilithiopolybutadiene B with THF as promotor for the cross-over to styrene polymerization

To a reactor, charged with 1 l of dry cyclohexane, were added a few drops of α,ω-dilithiopolybutadiene B to titrate the solution. Thereafter the reactor was charged with 30 g of butadiene and 40 ml of solution B (containing 0.6 mmol diinitiator) at room temperature. The temperature was allowed to rise to 40 °C and polymerization continued for 10 hours at 40 °C. A sample was withdrawn for analysis. The polybutadiene has the following characteristics: peak MW 51000 g/mol, Mw/Mn = 1.06 and a vinyl content of 15%. To the reactor were then added 50 µL of dry THF and 20 g of styrene and polymerization was continued for 2 hours at 40 °C. To the solution was added 1 ml of methanol to terminate the polymerization. The recovered triblock copolymer was stabilized with antioxidant and had the following characteristics: peak MW 89000 g/mol, Mw/Mn = 1.07.

A solvent-casted had a Tensile Strength of 30.5 MPA and an Elongation at break of 1500%.

### Example 8

### Synthesis of SBS block copolymers with α,ω-dilithiopolybutadiene A without promotor for the cross-over to styrene polymerization

To a polymerization bottle, charged with 250 ml of dry cyclohexane, a few drops of α,ω-dilithiopolybutadiene A were added to titrate the solution. Thereafter the reactor was charged with 8.6 g of butadiene and 6.8 ml of solution A (containing 0.17 mmol diinitiator) at room temperature. Polymerization was carried out for 2 hours at 60 °C. A sample was withdrawn for analysis. The polybutadiene has the following characteristics: peak MW 52000 g/mol, Mw/Mn = 1.24 and a vinyl content of 8.5%. To the bottle reactor were then added 5.5 g of styrene and polymerization was continued for 45 minutes at 60 °C. To the solution was added 1 ml of ethanol to terminate the polymerization. The recovered triblock copolymer was stabilized with antioxidant and had the following characteristics: peak MW 90000 g/mol, Mw/Mn = 1.19. A sample was subjected to ozonolysis to leave PS with peak MW 21500 g/mol.

### Comparative Examples

### Examples 9-12

### Inefficiency of the s-BuLi/1,3-DIB adduct

The adduct of s-BuLi and 1,3-diisopropenylbenzene was prepared following the procedure A of Example 1. With the resulting solution, several polymerizations have been carried out as shown in Table II.

| Sample | MW PB | MW PS^{a} | M_{w}/Mₙ | Tensile (MPA) | Elong. (%) | PS(ozone) |
|---|---|---|---|---|---|---|
| 9 | 10000 | 18000 | 1.30 | too weak | - | 40000 |
| 10 | 20000 | 18000 | 1.30 | too weak | - | 45000 |
| 11 | 55000 | 25000 | 1.25 | too weak | - | 45000 |
| 12 | 70000 | 13000 | 1.20 | 0.6 | 200 | 30000 |

| | | | | | | |
|---|---|---|---|---|---|---|
| ^{a}Calculated from GPC and ¹H NMR, assuming a triblock structure. | | | | | | |

## Claims

1. Process for the anionic polymerisation of monovinylaromatic monomers and conjugated dienes to form symmetrical triblock copolymers having the combination of narrow molecular weight distribution (Mw/Mn ≤ 1.20) and relatively low vinyl content (≤ 10%) of the predominantly poly(conjugated diene) blocks, which comprises:- charging a predominantly conjugated diene monomer to an α,ω-dilithio initiator in an apolar solvent and, after polymerisation is essentially complete, charging a predominantly monovinylaromatic monomer, optionally after adding an ether to promote the cross-over, and continuing polymerisation until it is again essentially complete; the said α,ω-dilithio initiator being obtainable by reacting two equivalents mono-organolithium initiator with one equivalent of 1,3-diisopropenyl benzene at a temperature in the range of from -20 to 60 °C, in an apolar hydrocarbon solvent, and in the presence of a monofunctional tertiary amine in a molar ratio relative to mono-organolithium initiator from 0.5 to 2, followed by addition to the reaction mixture of a small amount of conjugated diene monomer and, if any, less than 15 vol% of an aromatic ether activator relative to the total solvent volume, at a temperature in the range of from 0 to 30 °C, to form a solution of an α,ω-dilithio poly(conjugated diene), having an apparent molecular weight in the range of from 1000 to 3000.

2. Process according to claim 1, characterised in that the monofunctional tertiary amine is used in molar ratio relative to mono-organolithium initiator from 1.0 to 1.5.

3. Process according to claims 1 or 2, characterised in that the monofunctional amine is a trialkylamine in which the alkyl groups contain from 2 to 4 carbon atoms.

4. Process according to claim 3, characterised in that triethylamine is used.

5. Process according to any one of claims 1-4, characterised in that the mono-organolithium initiator is sec.butyllithium or tert.butyllithium.

6. Process according to any one of claims 1-5, characterised in that the reaction temperature during the reaction of 1,3-diisopropenylbenzene with the mono-organolithium initiator is in the range of from 0 to 30° C.

7. Process according to any one of claims 1-6, characterised in that the apolar hydrocarbon solvent is cyclohexane or cyclopentane.

8. Process according to claim 1, characterised in that the apparent molecular weight of the α,ω-dilithio initiator is in the range of from 1000 to 2800.

9. Process according to claim 8, characterised in that the apparent molecular weight of the α,ω-dilithio initiator is in the range of from 1200 to 2300.

10. Process according to any one of the preceding claims, characterised in that the ether to promote cross-over is tetrahydrofuran or diethoxypropane.

## Patentansprüche

1. Verfahren zur anionischen Polymerisation von monovinylaromatischen Monomeren und konjugierten Dienen zur Ausbildung symmetrischer Dreiblockcopolymere, die in Kombination eine enge Molekulargewichtsverteilung (Mw/Mn≤ 1,20) und einen verhältnismäßig niedrigen Vinylgehalt (≤ 10 %) der vorwiegend Poly(konjugierten Dien)blöcke aufweisen, welches Verfahren umfaßt: Zusetzen eines vorwiegend konjugierten Dienmonomers zu einem α,ω-Dilithioinitiator in einem apolaren Lösungsmittel und, nach im wesentlichen vollständiger Polymerisation, Zusetzen eines überwiegend monovinylaromatischen Monomers, gegebenfalls nach Zusetzen eines Ethers zur Förderung des Cross-over, und Fortsetzen der Polymerisation, bis sie wiederum im wesentlichen vollständig ist; wobei der α,ω-Dilithioinitiator durch Umsetzen von zwei Äquivalenten Monoorganolithiuminitiator mit einem Äquivalent 1,3-Diisopropenylbenzol bei einer Temperatur im Bereich von -20 bis 60°C in einem apolaren Kohlenwasserstofflösungsmittel und in Gegenwart eines monofunktionellen tertiären Amins in einem Molverhältnis, bezogen auf Monoorganolithiuminitiator, von 0,5 bis 2, gefolgt von einer Zugabe einer kleinen Menge an konjugiertem Dienmonomer zu dem Reaktionsgemisch und, falls überhaupt, weniger als 15 Vol.-% eines aromatischen Etheraktivators, bezogen auf das Gesamtlösungsmittelvolumen, bei einer Temperatur von 0 bis 30°C zur Ausbildung einer Lösung eines α,ω-Dilithio-poly(konjugiertes Dien) mit einem scheinbaren Molekulargewicht im Bereich von 1000 bis 3000 erhältlich ist.

2. Verfahren nach Anspruch 1, dadurch gekennzeichnet, daß das monofunktionelle tertiäre Amin in einem Molverhältnis zum Monoorganolithiuminitiator von 1,0 bis 1,5 eingesetzt wird.

3. Verfahren nach den Ansprüchen 1 oder 2, dadurch gekennzeichnet, daß das monofunktionelle Amin ein Trialkylamin ist, worin die Alkylgruppen 2 bis 4 Kohlenstoffatome enthalten.

4. Verfahren nach Anspruch 3, dadurch gekennzeichnet, daß Triethylamin verwendet wird.

5. Verfahren nach einem der Ansprüche 1 bis 4, dadurch gekennzeichnet, daß der Monoorganolithiuminitiator sek.Butyllithium oder tert.Butyllithium ist.

6. Verfahren nach einem der Ansprüche 1 bis 5, dadurch gekennzeichnet, daß die Reaktionstemperatur während der Umsetzung von 1,3-Diisopropenylbenzol mit dem Monoorganilithiuminitiator im Bereich von 0 bis 30°C liegt.

7. Verfahren nach einem der Ansprüche 1 bis 6, dadurch gekennzeichnet, daß das apolare Kohlenwasserstofflösungsmittel Cyclohexan oder Cyclopentan ist.

8. Verfahren nach Anspruch 1, dadurch gekennzeichnet, daß das scheinbare Molekulargewicht des α,ω-Dilithioinitiators im Bereich von 1000 bis 2800 liegt.

9. Verfahren nach Anspruch 8, dadurch gekennzeichnet, daß das scheinbare Molekulargewicht des α,ω-Dilithioinitiators im Bereich von 1200 bis 2300 liegt.

10. Verfahren nach einem der vorstehenden Ansprüche, dadurch gekennzeichnet, daß der Ether zur Förderung des Cross-over Tetrahydrofuran oder Diethoxypropan ist.

## Revendications

1. Procédé pour la polymérisation anionique de monomères monovinylaromatiques et de diènes conjugués pour former des copolymères triblocs symétriques ayant la combinaison d'une distribution de poids moléculaires étroite (Mw/Mn ≥1,20) et d'une teneur en vinyle relativement basse (≥10%) des blocs de poly(diène conjugué) d'une manière prédominante, qui comprend le chargement d'un monomère de diène conjugué d'une manière prédominante à un initiateur α,ω-dilithio dans un solvant apolaire et, après que la polymérisation est essentiellement complète, le chargement d'un monomère monovinylaromatique d'une façon prédominante, éventuellement après l'addition d'un éther pour promouvoir le croisement, et la continuation de la polymérisation jusqu'à ce qu'elle soit à nouveau essentiellement complète, ledit initiateur α,ω-dilithio étant obtenable en faisant réagir deux équivalents d'initiateur monoorganolithique avec un équivalent de 1,3-diisopropénylbenzène à une température dans l'intervalle de -20 à 60°C, dans un solvant hydrocarboné apolaire, et en présence d'une amine tertiaire monofonctionnelle dans un rapport molaire par rapport à l'initiateur monoorganolithique de 0,5 à 2, suivie de l'addition au mélange réactionnel d'une petite quantité de monomère de diène conjugué et, s'il y en a, moins de 15% en volume d'un activateur d'éther aromatique par rapport au volume de solvant total, à une température dans l'intervalle de 0 à 30°C, pour former une solution d'un α,ω-dilithio poly(diène conjugué), ayant un poids moléculaire apparent dans la gamme de 1000 à 3000.

2. Procédé suivant la revendication 1, caractérisé en ce que l'amine tertiaire monofonctionnelle est utilisée dans un rapport molaire par rapport à l'initiateur monoorganolithique de 1,0 à 1,5.

3. Procédé suivant l'une ou l'autre des revendications 1 et 2, caractérisé en ce que l'amine monofonctionnelle est une trialkylamine dans laquelle les groupes alkyle contiennent de 2 à 4 atomes de carbone.

4. Procédé suivant la revendication 3, caractérisé en ce qu'on utilise de la triéthylamine.

5. Procédé suivant l'une quelconque des revendications 1 à 4, caractérisé en ce que l'initiateur monoorganolithique est le sec.butyllithium ou le tert.butyllithium.

6. Procédé suivant l'une quelconque des revendications 1 à 5, caractérisé en ce que la température réactionnelle au cours de la réaction de 1,3-diisopropénylbenzène avec l'initiateur monoorganolithique se situe dans l'intervalle de 0 à 30°C.

7. Procédé suivant l'une quelconque des revendications 1 à 6, caractérisé en ce que le solvant hydrocarboné apolaire est le cyclohexane ou le cyclopentane.

8. Procédé suivant la revendication 1, caractérisé en ce que le poids moléculaire apparent de l'initiateur α,ω-dilithio se situe dans la gamme de 1000 à 2800.

9. Procédé suivant la revendication 8, caractérisé en ce que le poids moléculaire apparent de l'initiateur α,ω-dilithio se situe dans la gamme de 1200 à 2300.

10. Procédé suivant l'une quelconque des revendications précédentes, caractérisé en ce que l'éther utilisé pour favoriser le croisement est le tétrahydrofuranne ou le diéthoxypropane.
